# DEMANDE DE BREVET EUROPEEN

(11) **EP 2 744 081 A1**
(43) Date de publication de la demande: **18.06.2014**
(21) Numéro de dépôt: 13196506.3
(22) Date de dépôt: 10.12.2013
(51) Int. Cl.: H02K 3/28, H02K 3/52, H02K 15/00

(54) **Barre omnibus intégrable à un moteur électrique**

(30) Priorité: 11.12.2012 FR 1261893
(71) Demandeur: MERSEN France SB SAS, 69720 SAINT-BONNET-DE-MURE (FR)
(72) Inventeur: Forveille, Hervé, 49220 Gene (FR); Anne, François, 49100 Angers (FR)
(74) Mandataire: Myon, Gérard Jean-Pierre

(57) **Abrégé**

Cette barre omnibus (1) comprend au moins deux éléments conducteurs (10, 16, 20, 26, 30, 36, 40) qui comportent des moyens de raccordement électrique (14, 24, 34, 18, 28, 38, 44) de bobines appartenant au stator d'une machine électrique. Tous les éléments conducteurs (10, 16, 20, 26, 30, 36, 40) sont découpés chacun dans une plaque de matériau électriquement conducteur, recouverts d'une couche d'isolant électrique (101), empilés les uns au dessus des autres, l'empilement étant ensuite cintré selon une direction perpendiculaire à son épaisseur.

## Description

L'invention concerne une barre omnibus destinée à être intégrée à une machine électrique. Par machine électrique, on entend un moteur ou un générateur, voire un moto-générateur pouvant à la fois fonctionner en tant que moteur et générateur.

Une barre omnibus, ou plus couramment « busbar », est un ensemble d'éléments conducteurs pourvus de moyens de raccordements électriques. Dans le domaine de l'électronique de puissance, un busbar est souvent utilisé pour des valeurs de courant élevées où les moyens classiques de raccordement électrique, tels que des câbles ou des circuits imprimés, ne sont plus adaptés. Ceci car les éléments conducteurs d'un busbar ont le plus souvent une géométrie particulière telle qu'un tube, une barre ou une plaque et sont plus ou moins épais suivant les fréquences pour limiter l'effet de peau et ainsi dissiper le moins d'énergie possible. L'invention s'intéresse au cas où l'on souhaite connecter entre elles les bobines du stator d'une machine électrique. Dans un but de simplification, on traite ici le cas où la machine électrique est un moteur, bien que l'invention soit applicable également à des générateurs ou à des moto-générateurs, et on utilise parfois le terme « busbar», plus fréquemment usité que « barre omnibus » dans le domaine technique de l'invention.

Il est connu que le stator d'une machine électrique peut accueillir plusieurs groupes de bobines en fonction du nombre de phases du moteur. Dans un moteur électrique, le raccordement des bobines au réseau d'électricité est réalisé au moyen d'un bornier, qui est un dispositif permettant d'assurer la continuité électrique des câbles de sorties des bobines au secteur. Ce bornier est inclus dans le moteur et protégé par un boîtier fixé sur le moteur. Chaque bobine comprend un ou plusieurs fils émaillés ou méplat, de préférence en cuivre et tous les fils sont enroulés de la même façon, chaque fil ayant deux extrémités, l'ensemble des extrémités de part et d'autre des fils constituant les deux sorties d'une bobine. Pour ce faire, selon une technique connue, les bobines d'un groupe de bobines sont connectées entre elles par l'intermédiaire de câbles, chacun d'entre eux ayant une section déterminée en fonction de la puissance du moteur. En fonction du type de bornier, les sorties des bobines sont alors doublées voire triplées. Cela crée un problème d'encombrement, de temps de montage, de coût de matière première, ainsi que de fiabilité puisque le risque d'une erreur de câblage est élevé.

Un moteur utilisant des câbles est par ailleurs relativement lourd, de grandes dimensions et présente une inductance élevée. En effet, le fait d'utiliser des câbles impose au constructeur de souder l'extrémité des câbles au bornier. Comme les soudures constituant des résistances s'opposant au courant électrique, il convient alors d'utiliser des bobines ayant une inductance plus élevée, afin de prendre en compte les pertes d'énergie électrique liées à la soudure. Or, l'utilisation d'une inductance élevée implique qu'à haute fréquence, les bobines opposent une forte résistance au passage du courant. Le courant électrique traversant les bobines est donc faible, au même titre que le couple moteur qui lui est directement proportionnel.

Des barres omnibus connues de EP-A-1 526 628 et US-A-2009/015 297 comprennent chacune plusieurs bagues conductrices, qui assurent la connexion des bobines du stator entre elles. Ces bagues sont logées dans un support annulaire, dans lequel sont ménagées des rainures ou des cloisons de séparation des bagues entre elles, ce qui permet d'isoler électriquement les bagues les unes des autres. L'utilisation d'un support annulaire ajoute de l'encombrement radial et diminue la compacité du busbar, ce qui le rend plus difficile à intégrer au stator d'un moteur électrique.

Par ailleurs, DE-A-101 16 831 divulgue une barre omnibus dans laquelle les bagues conductrices sont formées à partir de bandes rectilignes, qui sont découpées dans une plaque de matériau conducteur, sur lesquelles sont collées une couche isolante et qui sont cintrées indépendamment pour leur donner une forme circulaire. L'assemblage des bagues de la barre omnibus est relativement difficile car il convient d'ajuster le diamètre de chaque bague. De plus, cela ne rend pas une barre omnibus monobloc et les bagues sont susceptibles de glisser légèrement les unes par rapport aux autres.

C'est à ces inconvénients qu'entend plus particulièrement remédier l'invention en proposant une barre omnibus ou busbar monobloc que l'on intègre facilement à une machine électrique pour connecter entre elles les bobines du stator de cette machine de façon à réduire l'inductance et dont la fabrication est facilitée.

A cet effet l'invention concerne une barre omnibus comprenant au moins deux éléments conducteurs qui comportent des moyens de raccordement électrique de bobines appartenant au stator d'une machine électrique, caractérisée en ce que tous les éléments conducteurs sont découpés chacun dans une plaque de matériau électriquement conducteur, recouverts d'une couche d'isolant électrique, empilés les uns au dessus des autres cintrés ensemble selon une direction perpendiculaire à leur épaisseur et superposés radialement par rapport à un axe central commun aux éléments conducteurs.

Grâce à l'invention, l'isolation électrique entre les différents éléments conducteurs ne nécessite pas de support annulaire isolant, qui diminuerait la compacité de la barre omnibus. En outre, le fait de cintrer l'ensemble des bandes après les avoir superposées permet d'obtenir une barre omnibus monobloc, dans laquelle les possibilités de glissement des bagues les unes par rapport aux autres sont limitées. Enfin, cela permet de s'affranchir du calcul du diamètre à donner à chaque bague.

Des aspects avantageux mais non obligatoires de la barre omnibus sont spécifiés aux revendications 2 à 6.

L'invention concerne également une machine électrique comportant un stator qui comprend un noyau cylindrique et creux, et au moins deux groupes d'au moins une bobine, respectivement associés à une phase de la machine électrique et un rotor qui tourne coaxialement à l'intérieur du stator. Cette machine est caractérisée en ce qu'elle comporte, en outre, une barre omnibus telle que mentionnée ci-dessus et dont l'axe central commun est confondu avec l'axe du stator.

Des caractéristiques avantageuses, mais non obligatoires de la machine électrique sont spécifiées aux revendications 7 à 10.

L'invention concerne enfin un procédé de fabrication d'une barre omnibus tel que décrite ci-dessus, caractérisé en ce qu'il comprend des étapes consistant à :
a) découper dans une plaque électriquement conductrice une bande de matériau pour chaque élément conducteur,
b) apposer une couche d'isolant électrique sur chaque bande,
c) empiler les bandes les unes au-dessus des autres, et
d) cintrer les bandes ensemble selon une direction perpendiculaire à leur épaisseur autour d'un axe commun.

Des aspects avantageux mais non obligatoires du procédé sont spécifiés aux revendications 12 et 13.

L'invention sera mieux comprise et d'autres avantages de celle-ci apparaîtront plus clairement à la lumière de la description qui va suivre de deux modes de réalisation d'une barre omnibus et d'un moteur électrique conformes à son principe, donnée uniquement à titre d'exemple et faite en référence aux dessins annexés dans lesquels :
- la figure 1 est une vue en perspective éclatée de principe d'un moteur électrique conforme à l'invention intégrant une barre omnibus conforme à l'invention,
- la figure 2 est une vue en perspective à plus grande échelle de la barre omnibus du moteur de la figure 1, sous un angle de vue différent de celui de la figure 1,
- la figure 3 est une vue en perspective éclatée des bagues de la barre omnibus de la figure 1, les couches d'isolant étant omises pour la clarté du dessin,
- la figure 4 est une vue en élévation selon la flèche IV de la figure 2,
- la figure 5 est une vue à plus grande échelle de la zone cerclée V à la figure 4 et,
- la figure 6 est une vue analogue à la figure 3, pour une barre omnibus conforme à un second mode de réalisation de l'invention.

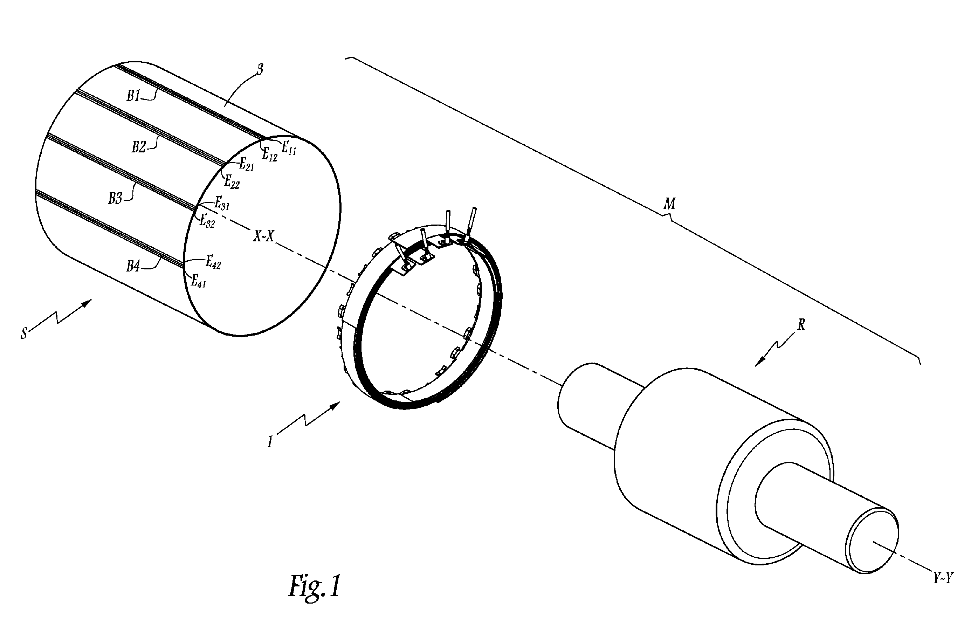

Sur la figure 1 est représenté un moteur M comprenant d'une part, un stator S qui inclut, d'une part, un noyau cylindrique et creux 3, centré sur un axe géométrique X-X, et, d'autre part, un rotor R, qui est monté à l'intérieur du stator S de manière rotative sur lui-même autour de l'axe X-X.

Le stator S est pourvu de bobines. Plus précisément, le noyau cylindrique et creux 3 précité comporte vingt-quatre encoches accueillant douze bobines qui sont réparties autour de l'axe X-X du noyau 3, c'est-à-dire s'étendant sur une portion du noyau 3. De manière générale, le nombre de bobines ainsi que le nombre d'encoches utilisées dépend de la puissance du moteur. A titre de rappel, une bobine est un enroulement d'un ou plusieurs fils émaillés, souvent en cuivre, autour d'une géométrie définie par les deux encoches précédemment évoquées. Dans l'exemple, un groupe de bobines comprend quatre bobines B₁, B₂, B₃ et B₄. Cependant, le nombre de bobines utilisé dans un groupe de bobines dépend également de la puissance du moteur.

A la figure 1, seul un groupe de bobines est représenté, pour la clarté du dessin, et les bobines B₁ à B₄ sont figurées par quelques enroulements, alors qu'elles comportent en réalité de nombreux enroulements.

Les bobines B₁, B₂, B₃ et B₄ comprennent chacune deux sorties, définies par les deux extrémités du ou des fils émaillés qui les composent et respectivement notées E₁₁ et E₁₂, E₂₁ et E₂₂, E₃₁ et E₃₂ et E₄₁ et E₄₂. Par ailleurs, le moteur M qui est triphasé, est pourvu de trois groupes de bobines correspondant chacun à une phase du moteur. Les bobines d'un groupe de bobines sont connectées entre elles, en série ou en parallèle selon le schéma électrique sélectionné, et sont parcourues par un courant alternatif. Comme évoqué précédemment, le raccordement des bobines B₁ à B₄ et équivalentes du stator S au secteur est réalisé au moyen d'un bornier non représenté et appartenant au moteur M.

Pour le moteur triphasé M, le bornier comporte trois bornes de phase correspondant chacune à une phase du secteur et une borne neutre, normalement reliée à la terre. Ainsi, le stator S porte deux groupes de bobines, analogues à celui formé par les bobines B₁ à B₄, ces deux groupes de bobines n'étant pas représentés.

Chaque groupe de bobine dispose d'une sortie destinée à être raccordée à la phase électrique correspondante ainsi qu'au moins une sortie destinée à être raccordée au neutre du bornier.

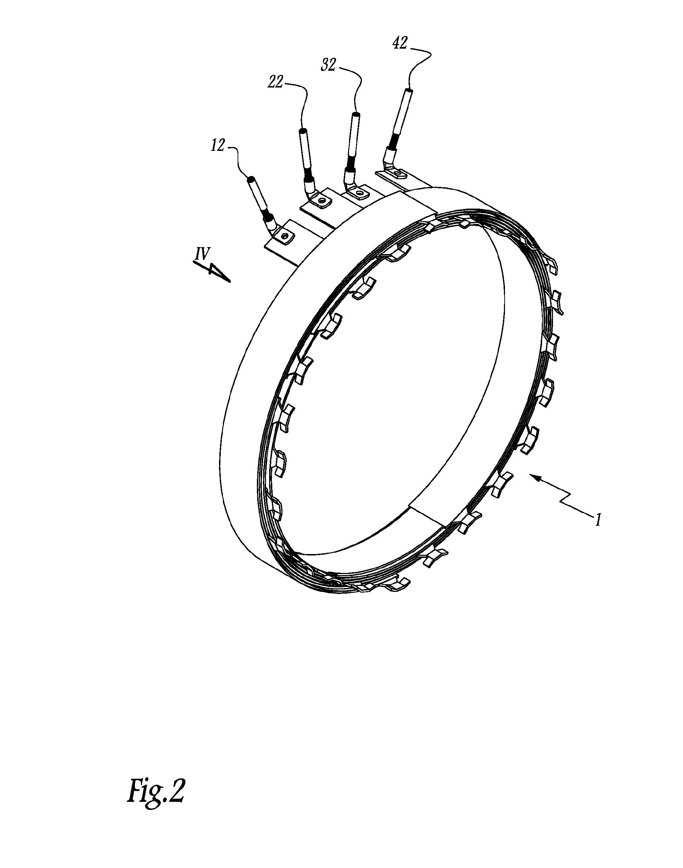

De plus, comme représenté sur la figure 1, le moteur M comprend une barre omnibus ou busbar 1 qui connecte électriquement les bobines du stator S entre elles et au bornier. Ce busbar 1 est représenté seul sur les figures 2 à 5 et va être détaillé ci-après. Au sein du moteur M à l'état assemblé, le busbar 1 est inséré à l'intérieur d'une extrémité axiale du noyau 3, à savoir celle visible à la figure 1.

Le busbar 1 comprend plusieurs éléments conducteurs assemblés les uns avec les autres géométriquement et/ou électriquement. Dans le cas présent, les éléments conducteurs sont des portions de bagues toutes de diamètre différent, qui sont centrées autour d'un axe central commun Y-Y, qui, en configuration assemblée du busbar 1 sur le stator 3, est confondu avec l'axe longitudinal X-X du stator S. Les bagues du busbar 1 sont au nombre de sept et présentent chacune un profil circulaire, en section perpendiculaire à l'axe Y-Y. Elles s'étendent sur un angle inférieur à 360° autour de l'axe commun Y-Y, ce qui permet astucieusement de réduire le coût matière.

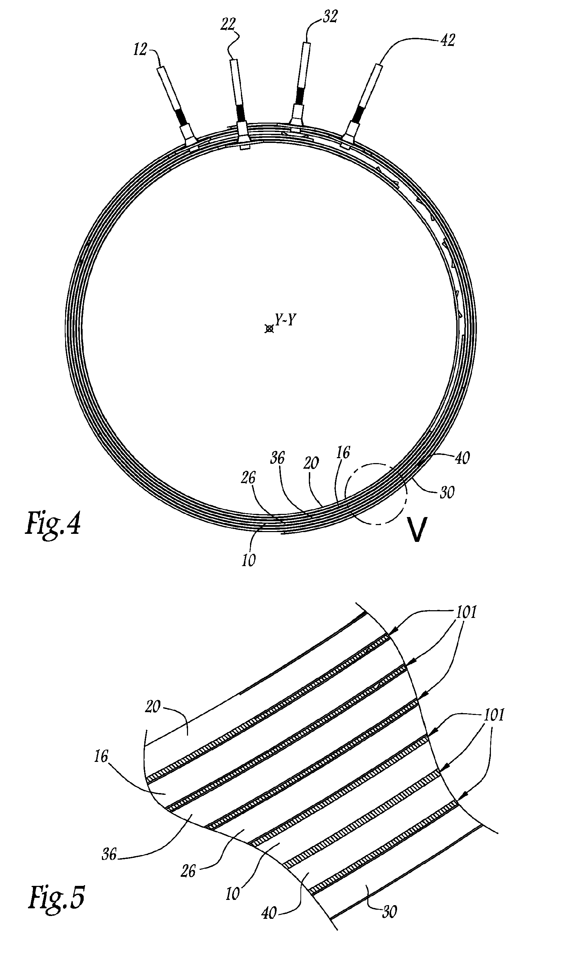

Par ailleurs, une couche d'isolant électrique, 101 représentée uniquement sur la figure 5, est disposée entre chaque paire de deux bagues adjacentes et/ou sur la surface interne et/ou sur la surface externe du busbar 1 afin d'éviter tout court-circuit ou mauvaise circulation du courant.

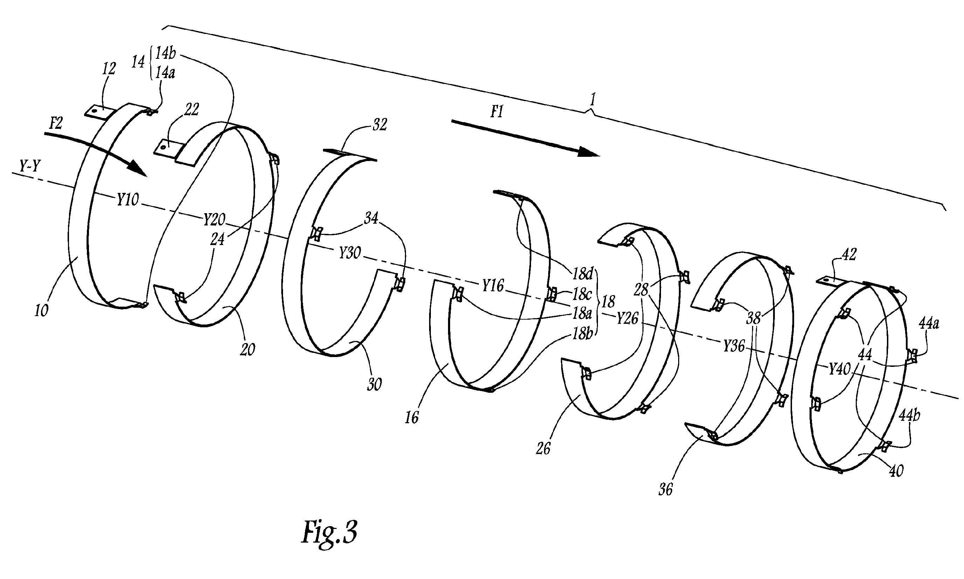

Les bagues 10, 20, et 30 qui sont sur la partie gauche de la figure 3, sont des bagues destinées à être raccordées au bornier du moteur M, non représenté sur les figures. Ainsi, chacune de ces bagues 10, 20 et 30 comprend une borne d'entrée, respectivement notée 12, 22 et 32 correspondant à une phase du moteur. On comprend donc que l'utilisation d'un tel busbar 1 a pour avantage de supprimer les câbles utilisés en double ou en triple, permettant auparavant d'assurer le raccordement au bornier.

Ces bagues 10, 20 et 30 comprennent également chacune une ou plusieurs pattes de sortie, respectivement notées 14, 24 et 34 destinées à être raccordées aux bobines du stator.

Dans le cas présent, on comprend donc que le fait d'avoir deux pattes de sortie sur les bagues 10, 20 et 30 correspond à un branchement parallèle, à l'inverse, la présence d'une seule patte de sortie impliquerait un branchement en série.

Les trois bagues suivantes dans l'ordre à partir de la gauche, 16, 26 et 36 sont des bagues de mise en série ou de mise en parallèle, selon le schéma électrique du moteur M. Ces bagues spécifiques au type de schéma électrique sont appelées bagues d'interconnexion. Chacune de ces bagues d'interconnexion 16, 26 et 36 comprennent également des pattes d'entrée/sortie, respectivement notées 18, 28 et 38 qui sont utilisées comme point de raccordement électrique des extrémités des bobines du stator 3. Dans cet exemple, elles sont au nombre de quatre sur chaque bague d'interconnexion 16, 26 et 36, mais cela dépend du nombre de bobines dans un groupe de bobines et donc de la puissance du moteur. Les bagues d'interconnexion 16, 26 et 36 ne comportent donc pas de borne d'entrée pouvant être connectée au bornier et sont conçues de manière à ce que, en configuration assemblée du busbar 1 sur le stator 3, elles sont respectivement connectées électriquement aux bagues 10, 20 et 30 à travers une bobine. En effet, les deux pattes de sortie 14, 24 et 34 sont chacune reliées, indépendamment et respectivement à travers une bobine, à une patte de sortie 18, 28 et 38 appartenant à la bague d'interconnexion 16, 26 et 36 correspondante.

La première bague en partant de la droite sur la figure 3 est une bague 40 destinée à être raccordée au neutre du bornier. En effet, il est nécessaire pour fermer le circuit électrique de chaque phase que chaque groupe de bobines, soit raccordé au neutre du bornier. C'est pourquoi le busbar 1 comporte, dans le cas d'un moteur triphasé, la bague 40, assurant la connexion de chaque groupe de bobines au neutre du bornier. Pour cela, la bague 40 comporte une borne d'entrée 42, permettant de raccorder la bague 40 au neutre du bornier.

Pour un branchement en parallèle, deux bobines sont nécessaires pour connecter chaque branche en parallèle à la borne neutre. Pour trois phases, six bobines sont alors raccordés à la borne neutre. C'est pourquoi la bague 40 reliée à la borne neutre de l'alimentation comporte six pattes de sortie, notées 44.

Les pattes de sortie 14, 24, 34, 44, 18, 28 et 38 sont serties autour des fils émaillés des bobines du stator S au moyen d'une pince qui permet également de faire fondre le vernis afin d'assurer le contact électrique. A titre de variante, il est également possible, pour assurer le contact électrique, de souder l'extrémité des fils émaillés sur les pattes de sortie 14, 24, 34, 18, 28, 38 et 44 ou encore d'immobiliser les fils émaillés dans des cosses à oeil qui sont ensuite vissées sur les pattes de sorties 14, 24, 34, 18, 28, 38 et 44 chacune pourvues d'un taraudage adapté.

Les bagues 10, 20, 30, 16, 26, 36 et 40 sont toutes obtenues à partir de plaques de matériau conducteur. Dans un premier temps, une plaque de matériau conducteur, par exemple une plaque de tôle, est découpée sous la forme de bandes, en préservant les bornes d'entrées 12, 22, 32 et 42 et les pattes de sortie 14, 24, 34 et 44. Puis, les bandes ainsi découpées sont empilées les unes au dessus des autres selon une direction perpendiculaire à leur épaisseur, en interposant une couche d'isolant électrique 101 entre chaque paire de deux bandes successives. Les couches d'isolant et les bandes sont ensuite solidarisées par toute technique appropriée, notamment par laminage. Ici, le laminage désigne un procédé à chaud consistant à coller les couches isolantes 101 avec les bandes de matériau conducteur, en appliquant notamment une pression sur les bandes dirigée de manière perpendiculaire à leur épaisseur Cela revient à un thermocollage. Le fait d'avoir les conducteurs assemblés par l'intermédiaire d'isolants thermocollés diminue la distance entre les éléments conducteurs et donc l'inductance du busbar.

L'ensemble des bandes et des couches isolantes 101 prend alors la forme d'une pièce rectiligne monobloc. Cette pièce monobloc est ensuite cintrée selon une direction F2 perpendiculaire à l'épaisseur des bandes, pour parvenir à une forme centrée sur l'axe commun Y-Y. Le fait de cintrer toutes les bandes ensemble permet de garantir un espace d'isolation constant entre chaque bague et de s'affranchir de l'ajustement du diamètre de chaque bague pour la confection du busbar. Le busbar ainsi formé est monobloc, si bien qu'il n'y a pas de possibilités de glissement relatif entre les différentes bagues du busbar.

Afin de détailler plus précisément la connexion des bobines du stator S, on se limite, dans un but de simplification, au branchement électrique du groupe de bobines B₁, B₂, B₃ et B₄, et on considère que les bagues 10 et 16 sont associées à ce groupe. De plus, on note pour la clarté de la description, 14a et 14b les deux pattes de sortie 14 de la bague 10 et 18a, 18b, 18c et 18d les quatre pattes de sortie 18 de la bague 16. On note également 44a et 44b deux pattes de sortie parmi les pattes de sortie 44.

Ainsi, on comprend que l'extrémité E₁₁ de la bobine B₁ est sertie dans la patte de sortie 14a de la bague 10 et l'extrémité E₁₂ est sertie dans la patte de sortie 18a. En parallèle, l'extrémité E₂, de la bobine B₂ est sertie dans la patte de sortie 14b de la bague 10 et l'extrémité E₂₂ est sertie dans la patte de sortie 18b. Afin de boucler le circuit, les deux bobines restantes B₃ et B₄ ont leurs extrémités E₃₁ et E₃₂ et E₄₁ et E₄₂ respectivement serties dans les pattes de sortie 18c et 44a et 18d et 44b. Par ailleurs, la connexion de ce groupe de bobines ne se limite pas à l'exemple cité ci-dessus car toutes les combinaisons sont possibles,

Ainsi, on peut très bien connecter la patte de sortie 14a ou 14b à l'une des pattes de sortie 18a, 18b ou 18d et, de façon analogue, on peut connecter deux des pattes de sortie 18a, 18b, 18c et 18d à deux des pattes de sortie 44a et 44b de manière indifférente.

En revanche, il y a toujours une combinaison préférentielle qui est de connecter l'extrémité des bobines directement avec la patte de sortie axialement en regard. Cela permet de limiter l'encombrement de la connexion entre les bobines et les pattes de sortie. A cet effet, le busbar 1 est conçu de manière à ce que, en configuration assemblée du busbar 1, comme illustré à la figure 2, chaque patte de sortie 14, 24, 34, 18, 28, 38 et 44 respectivement des bagues 10, 20, 30, 16, 26, 36 et 40, est angulairement disposée autour de l'axe X-X, afin qu'elle se trouve axialement en regard d'une extrémité d'une bobine.

En configuration assemblée du busbar 1, les bagues 10, 20, 30, 16, 26, 36 et 40 sont respectivement centrées sur des axes Y10, Y20, Y30, Y16, Y26, Y36 et Y40 qui sont tous confondus avec l'axe Y-Y. La bague 10 s'étend sur un angle d'environ 180° respectivement autour de l'axe Y10, alors que les bagues 20, 30, 16, 26 et 36 s'étendent sur un angle d'environ 270° respectivement autour des axes Y20, Y30, Y16, Y26 et Y36, et la bague 40 s'étend sur un angle d'environ 350° autour de l'axe Y40. Cependant, à titre de variante non représentée, il est possible qu'une ou plusieurs bagues du busbar 1 soient fermées et s'étendent donc sur 360°. En l'occurrence, il est envisageable que la bague 40 soit fermée au lieu de s'étendre sur 350° environ.

De plus, à titre de variante non représentée, il est possible d'ajouter une couche d'isolant électrique sur la surface interne de la bague 20 la plus interne au busbar 1 et une couche d'isolant électrique sur la surface externe de la bague 30 la plus externe au busbar 1. Ces couches sont également collées, respectivement en dessous de la bande inférieure et au dessus de la bande supérieure, avant le cintrage des bandes.

Par ailleurs, toutes les pattes de sortie 14, 24, 34, 18, 28, 38 et 44 sont orientées, dans l'exemple, dans une même direction F1, qui est une direction longitudinale orientée de la gauche vers la droite le long de l'axe Y-Y à la figure 3, ceci afin d'éviter une erreur de montage. En variante, les pattes de sortie 14, 24, 34, 18, 28, 38 et 44 peuvent être orientées de manière différente, indépendamment les unes des autres.

De plus, il convient de disposer chaque sortie 12, 22, 32 et 42 destinée à être connectée au bornier côte à côte. On facilite ainsi le raccordement du busbar 1 au bornier.

D'autres modes de réalisation sont envisageables concernant cette invention. A titre d'exemple, il est possible d'utiliser uniquement une bague 10, 20, 30 par phase, sans utiliser de bagues d'interconnexion 16, 26, 36.

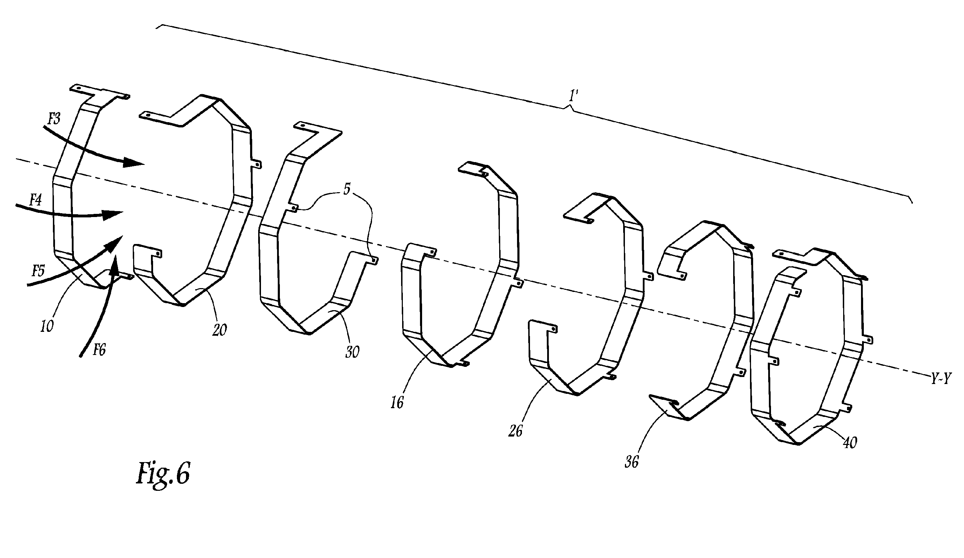

Un autre mode de réalisation réside en l'utilisation d'un busbar 1', de forme, non pas circulaire, mais polygonale, représenté en vue éclatée à la figure 6, où les bagues du busbar 1' sont pliées ensemble sous la forme d'un polygone, éventuellement interrompu. Ainsi, les éléments conducteurs sont chacun découpés dans une plaque de matériau conducteur en prenant soin de préserver les moyens de raccordement électrique, puis laminés avec une couche d'isolant électrique et enfin cintrés ensemble autour d'un axe central, au moyen de plusieurs opérations de pliage.

On comprend donc que le cintrage des éléments conducteurs empilés peut être interprété, soit comme un roulage, c'est-à-dire une déformation visant à donner au busbar une forme circulaire ou arrondie, soit comme plusieurs opérations de pliage visant à donner au busbar une forme polygonale.

Dans le cas de la figure 6, quatre opérations de pliage sont réalisées, perpendiculairement à l'épaisseur des éléments conducteur et selon quatre directions différentes F₃, F₄, F₅ et F₆. L'invention est réalisable quel que soit le nombre de pliages, du moment que le nombre et les zones de pliages sont les mêmes pour tous les éléments conducteurs 10, 20, 30, 16, 26, 36 et 40.

Par ailleurs, dans ce mode de réalisation, le raccordement des pattes de sorties 14, 24, 34, 18, 28, 38 et 44 est réalisé au moyen de visserie comme en témoignent des perçages taraudés 5, illustrés à titre d'exemple uniquement sur la bague 30 de la figure 6 mais qui sont disposés sur chacune des bagues 10, 20, 30, 40, 16, 26 et 36. Ces perçages taraudés 5 traversent les pattes de sortie 14, 24, 34, 18, 28, 38 et 44 et sont destinés à accueillir des vis de serrage.

Dans la description qui précède, le moteur électrique M est triphasé car ce mode de réalisation se prête bien à l'utilisation du busbar 1. En revanche, cela ne signifie pas que l'invention soit limitée à ce mode de réalisation : l'invention trouve son application également dans les moteurs de type monophasé, voire comportant un nombre de phases strictement supérieur à trois.

## Revendications

1. Barre omnibus (1 ; 1') comprenant au moins deux éléments conducteurs (10, 16, 20, 26, 30, 36, 40) qui comportent des moyens de raccordement électrique (14, 24, 34, 18, 28, 38, 44) de bobines appartenant au stator d'une machine électrique (M), **caractérisée en ce que** tous les éléments conducteurs (10, 16, 20, 26, 30, 36, 40) sont découpés chacun dans une plaque de matériau électriquement conducteur, recouverts d'une couche d'isolant électrique (101), empilés les uns au dessus des autres, cintrés ensemble selon une direction perpendiculaire à leur épaisseur et superposés radialement par rapport à un axe central (Y-Y) commun aux éléments conducteurs (10, 16, 20, 26, 30, 36, 40).

2. Barre omnibus (1 ; 1') selon la revendication 1, **caractérisée en ce que** tous les éléments conducteurs (10, 16, 20, 26, 30, 36, 40) de la barre omnibus (1 ; 1') ont, en section perpendiculaire à l'axe central (Y-Y), un profil circulaire.

3. Barre omnibus (1 ; 1') selon la revendication 1, **caractérisée en ce que** tous les éléments conducteurs (10, 16, 20, 26, 30, 36, 40) de la barre omnibus (1 ; 1') ont, en section perpendiculaire à l'axe central (Y-Y), un profil polygonal.

4. Barre omnibus (1 ; 1') selon l'une quelconque des revendications précédentes, **caractérisée en ce qu'**au moins un des éléments conducteurs (10, 16, 20, 26, 30, 36, 40) de la barre omnibus (1 ; 1') s'étend sur un angle strictement inférieur à 360° autour de l'axe central commun (Y-Y).

5. Barre omnibus (1 ; 1') selon l'une quelconque des revendications précédentes, **caractérisée en ce que** les moyens de raccordement électrique sont des pattes de sorties (14, 18, 24, 28, 34, 38, 44) toutes orientées dans la même direction (F1), le long de l'axe commun (Y-Y) et par rapport aux éléments conducteurs (10, 20, 30, 16, 26, 36, 40).

6. Barre omnibus (1 ; 1') selon l'une quelconque des revendications précédentes, **caractérisée en ce que** la barre omnibus (1 ; 1') comprend en outre une couche d'isolant électrique qui est radialement disposée à l'intérieur de l'élément conducteur (20) le plus interne à la barre omnibus (1 ;1') ou autour de l'élément conducteur (30) le plus externe à la barre omnibus (1 ;1').

7. Machine électrique (M) comportant :
- un stator (S) qui comprend un noyau cylindrique et creux (3), et au moins deux groupes d'au moins une bobine (B₁, B₂, B₃, B₄), respectivement associés à une phase de la machine électrique,
- un rotor (R) qui tourne coaxialement à l'intérieur du stator (S),
**caractérisée en ce que** la machine électrique (M) comporte en outre une barre omnibus (1 ;1') conforme à l'une des revendications 1 à 6, et dont l'axe central commun (Y-Y) est confondu avec l'axe (X-X) du stator (S)

8. Machine électrique (M) selon la revendication 7 **caractérisée en ce que** chaque groupe de bobines comporte plusieurs bobines (B₁, B₂, B₃, B₄) et **en ce que** plusieurs éléments conducteurs (10,16,40) de la barre omnibus sont raccordés aux bobines d'un même groupe.

9. Machine électrique (M) selon la revendication 7 ou 8, **caractérisée en ce que** tous les groupes de bobines du stator (S) sont raccordés à un conducteur de neutre (40) de la barre omnibus (1 ;1').

10. Machine électrique (M) selon l'une des revendication 7 à 9, **caractérisée en ce que** les pattes de sorties (14, 18, 24, 28, 34, 38, 44) des éléments conducteurs (10, 16, 20, 26, 30, 36, 40) sont angulairement disposées autour de l'axe (X-X) du stator (S) de manière à ce que, en configuration assemblée de la barre omnibus (1 ; 1') sur le stator (S), chaque patte de sortie (14, 18, 24, 28, 34, 38, 44) se retrouve axialement en face d'au moins une sortie d'une bobine.

11. Procédé de fabrication d'une barre omnibus (1 ; 1') conforme à l'une quelconque des revendications 1 à 6, **caractérisé en ce qu'**il comprend des étapes consistant à :
a) découper dans une plaque électriquement conductrice une bande de matériau pour chaque élément conducteur (10, 16, 20, 26, 30, 36, 40).
b) apposer une couche (101) d'isolant électrique sur chaque bande,
c) empiler les bandes les unes au dessus des autres, et
d) cintrer les bandes ensemble selon une direction perpendiculaire à leur épaisseur autour d'un axe commun (Y-Y).

12. Procédé selon la revendication 11, **caractérisé en ce qu'**il comprend une étape, postérieure à l'étape c) et antérieure à l'étape d), consistant à coller à chaud les bandes (10, 16, 20, 26, 30, 36, 40) ensemble, ces bandes étant équipées des couches (101) d'isolant électrique et à les laminer.

13. Procédé selon l'une des revendications 11 ou 12, **caractérisée en ce que** les étapes b) et c) sont réalisées de manière alternative, c'est-à-dire que les bandes de matériau conducteur sont empilées en interposant à chaque fois une couche (101) d'isolant électrique entre deux bandes successives.
